# EUROPEAN PATENT SPECIFICATION

(11) **EP 1 474 477 B1**
(45) Date of publication and mention of the grant of the patent: **11.01.2006**
(21) Application number: 03703538.3
(22) Date of filing: 07.02.2003
(51) Int. Cl.: C08L 23/16, C08L 23/00

(54) **THERMOPLASTIC ELASTOMER COMPOSITION**
THERMOPLASTISCHE POLYMERZUSAMMENSETZUNG
COMPOSITION D'ELASTOMERE THERMOPLASTIQUE

(30) Priority: 11.02.2002 EP 02075536
(43) Date of publication of application: 10.11.2004
(73) Proprietor: DSM IP Assets B.V., 6411 TE Heerlen (NL)
(72) Inventor: DOZEMAN, Albertus, Otto, NL-6121 NK Born (NL)
(74) Representative: Krijgsman, Willem
(86) International application number: PCT/NL2003/000085
(87) International publication number: WO 2003/068859

(56) References cited:
- WO-A-01/21705
- WO-A-99/24506
- US-A- 4 212 787

## Description

The invention relates to a thermoplastic elastomer composition comprising a thermoplastic polyolefine, an elastomer and oil.

Thermoplastic elastomer compositions are known from "Handbook of Thermoplastic Elastomers, chapter 3, Van Nostrand Reinhold, New York (1988). The described thermoplastic elastomer composition comprises a blend of a thermoplastic polyolefinic polymer, an elastomer and hydrocarbon oil.
Although the known thermoplastic elastomer compositions often possess desirable properties there is a need for thermoplastic elastomer compositions having a better balance in properties, especially a combination of both good mechanical properties and good processability.

The object of the present invention is to provide thermoplastic elastomer compositions with an improved balance of mechanical properties and processability, more specific a good balance in flexibility, compression set and extrusion quality.

This object is achieved in that the thermoplastic elastomer composition comprises less than 15% by weight of the thermoplastic polyolefine, relative to the total weight of the thermoplastic elastomer composition, the elastomer is peroxide vulcanized and the weight ratio oil/elastomer is above 1.5.

Surprisingly it has been found that the thermoplastic elastomer composition according to the present invention shows good mechanical properties, for example elastic properties and extrusion quality, i.e. a smooth surface showing no flow marks. Another advantage is that the thermoplastic elastomer composition provides a good processability. Moreover the thermoplastic elastomer composition shows good flow properties. Yet a further advantage is that the thermoplastic elastomer composition has a good compression set.

It is quite surprising that the thermoplastic elastomer composition, in which the elastomer is vulcanized by peroxides, which comprises an oil/elastomer ratio above 1,5 and a relative low amount of thermoplastic polyolefine results in thermoplastic elastomers which have a good balance in properties.

From EP-A-574040 partially vulcanized thermoplastic elastomer composition are known. Described is a thermoplastic elastomer composition comprising an oil-extended olefinic copolymer rubber obtained by oil extending the olefinic copolymer with 20-150 parts by weight of oil per 100 parts by weight of olefinic copolymer and a thermoplastic polyolefine. Said composition has been vulcanized in the presence of an organic peroxide. Further described is that more than 150 parts by weight of oil per 100 parts by weight of olefinic copolymer degradates the mechanical properties and results in deterioration of processability.

From EP-A-436724 it is known to prepare thermoplastic elastomer compositions with hardness values below 50 shore A, by mixing an olefin copolymer rubber and an olefin plastic in an extrusion machine and feeding through an inlet separately from the hopper into the extruder a mineral oil type softener in combination with silicone oil whereby the mixture is heat treated in the presence of an organic peroxide. This application describes a two-steps process, is silent about the extrusion quality of the thermoplastic elastomer compositions and silicone oil has to be used to achieve the desired thermoplastic elastomer compositions. Athough not per se excluded in the present invention, the use of silicone oil is not necessary to achieve the desired thermoplastic elastomer compositions of the present invention.

Examples of the thermoplastic polyolefine are homopolymers of ethylene or propylene, copolymers of ethylene and propylene, copolymers of ethylene and an alpha-olefin co-monomer with 4-20 carbon atoms or copolymers of propylene and an alpha-olefin co-monomer with 4-20 carbon atoms. In case of a copolymer with an alpha-olefin co-monomer, the co-monomer preferably has 6-8 carbon atoms. In case of a copolymer containing polypropylene, the content of propylene in said copolymer is preferably at least 75 wt.%. The thermoplastic polyolefin homo- and copolymers may be prepared with a Ziegler-Natta catalyst, a metallocene catalyst or with another single site catalyst.

Preferably, polypropylene, polyethylene or mixtures thereof are used as thermoplastic polyolefine. More preferably polypropylene is used as thermoplastic polyolefine. The polypropylene may be linear or branched. Preferably a linear polypropylene is used.

The Melt flow index (MFI) of the polypropylene preferably is between 0.1 and 50; more preferably between 0,3-20 (according to ISO norm 1133 (230ºC; 2.16 kg load)).

The amount of thermoplastic polyolefine is less than 15% by weight relative to the total weight the thermoplastic elastomer composition. Preferably the amount of thermoplastic polyolefine is between 1-12% by weight, more preferably between 5-10% by weight relative to the total weight the thermoplastic elastomer composition.

In an embodiment of the invention the used thermoplastic polyolefin(s) is of low crystallinity or contain small crystalline regions. Preferably random polyethylene-polypropylene copolymers or random polypropylene is used for this purpose. In another preferable embodiment of the invention copolymers with an alpha-olefin co-monomer are used. Also a thermoplastic polyolefin containing nucleating agents may be used for this purpose. A nucleating agent has the effect of decreasing the size of the crystalline regions. A suitable size of the crystalline regions is for example smaller than 200 nm. The thermoplastic elastomer composition then obtained is translucent or even transparent. The degree of translucency may further be enchance by adding suitable additives or fillers.

The elastomer may be any elastomer capable of being vulcanized by a peroxide as vulcanization agent. Examples of suitable elastomers are copolymers of ethylene and propylene (EPM) or copolymers of ethylene, propylene and a third monomer (EPDM) or a mixture of EPDM and EPM. Also suitable are for example copolymers of ethylene with a higher alpha-olefin, styrene-butadiene rubber, acrylonitrile-butadiene rubber, isobutene-isoprene rubber, styrene-ethylene/styrene-butyl rubber, isobutylene-p-methylstyrene copolymers or brominated isobutylene-p-methylstyrene copolymers or natural rubber. Preferably, EPM or EPDM is used as elastomer. More preferably, EPDM is used as elastomer. The EPDM preferably contains 50-70 parts by weight ethylene monomer units, 48-30 parts by weight monomer units originating from an alpha-olefin and 1-12 parts by weight monomer units originating from a non-conjugated diene. As alpha-olefin use is preferably made of propylene. As non-conjugated diene use is preferably made of dicyclopentadiene (DCPD), 5-ethylidene-2- norbornene (ENB) or vinylnorbornene (VNB) or mixtures thereof. The elastomer may comprise a processing oil for example paraffinic, naphtalenic or aromatic oil. The elastomer is for example prepared with a Ziegler-Natta catalyst, a metallocene catalyst or other single site catalysts.

The elastomer is vulcanized in the presence of a peroxide. Examples of suitable peroxides are organic peroxides for example dicumyl peroxide, di-tert-butylperoxide, 2,5-dimethyl-(2,5-di-tert-butylperoxy)hexane, 1,3 -bis(tert-butylperoxyisopropyl)benzene, 1,1-bis(tert-butylperoxy)-2,3,5-trimethylcyclohexane, benzoyl peroxide, 2,4-dichlorobenzoyl peroxide, tert-butyl peroxybenzoate, tert-butyl peroxyisopropylcarbonate, diacetyl peroxide, lauroyl peroxide, tert-butyl cumyl peroxide. The amount of peroxide is preferably between 0,02-5% by weight and more preferably between 0,05-2% by weight relative to the total weight of the thermoplastic elastomer composition.

A co-agent may also be used during vulcanization of the elastomer. Examples of suitable co-agents are divinyl benzene, sulphur, p-quinondioxime, nitrobenzene, diphenylguanidine, triarylcyanurate, trimethylolpropane-N,N-m-phenylenedimaleimide, ethyleneglycol dimethacrylate, polyethylene dimethacrylate, trimethylolpropane trimethacrylate, arylmethacrylate, vinylbutylate and vinylstearate. The amount of co-agent is preferably between 0-2.00% by weight of the total weight of the thermoplastic elastomer composition.

The degree of vulcanization of the elastomer can be expressed in terms of gel content. Gel content is the ratio of the amount of non-soluble elastomer and the total amount of elastomer (in weight) of a specimen soaked in an organic solvent for the elastomer. The method is described in US-A-5100947. In general terms a specimen is soaked for 48 hours in an organic solvent for the elastomer at room temperature. After weighing of both the specimen before soaking and the dried residue of the soaked specimen the amount of non-soluble elastomer and total elastomer are calculated, based on knowledge of the relative amounts of all components in the thermoplastic elastomer composition. The elastomer is at least partially vulcanized. The elastomer may be vulcanized to a gel content higher than 70%. Preferably to a gel content higher than 90%, more preferably higher than 93%, even move preferably higher than 95%. In another preferred embodiment of the invention the elastomer is vulcanised to a gel content of at least 98%. Most preferably the elastomer is vulcanized to a gel content of about 100%.

Examples of suitable oils are paraffinic oil, naphthenic oil, aromatic oil obtained from petroleum fractions. As paraffinic oil for example Sunpar ™ oil may be used. Also highly hydrogenated oil in which the concentration of aromatic compounds is preferably less than 4 wt.% and the concentration of polar compounds is less than 0.3 wt.% may be used. An example of such oil is PennzUltra ™1199, supplied by Pennzoil in the United States of America. In the thermoplastic elastomer composition according to the present invention preferably between 155-250 parts of oil is present per 100 parts of elastomer. More preferably between 160-210 parts of oil is present per 100 parts of elastomer. Most preferably between 170-200 parts of oil is present per 100 parts of elastomer. It is possible according to the present invention to use an oil extended elastomer as raw material in which a part of the oil is already present in the elastomer, as long as the above total amounts of oil are used in the thermoplastic elastomer composition.

Preferably the weight ratio oil/elastomer is above 1,6. Most preferably the weight ratio oil/elastomer is above 1,7.

The thermoplastic elastomer composition according to the present invention may also comprise for example reinforcing and non-reinforcing fillers, plasticizers, antioxidants, stabilizers, antistatic agents, waxes, foaming agents, pigments, flame retardants and other known agents described in for example the Rubber World Magazine Blue Book. Examples of fillers that may be used are calcium carbonate, clay, silica, talc, titanium dioxide, and carbon. Another additive that may optionally be used in the thermoplastic elastomer composition is a Lewis base for example a metal oxide, a metal hydroxide, a metal carbonate or hydrotalcite.

The present invention also relates to a process for the preparation of the thermoplastic elastomer composition according to the present invention comprising melt mixing and kneading a thermoplastic polyolefine, an elastomer and oil in the presence of a peroxide vulcanizing agent. Vulcanization in this way is also known as dynamic vulcanization.

The thermoplastic elastomer composition of the present invention may be prepared by melt mixing the composition in one step. By in one step is meant that the thermoplastic polyolefine, the elastomer, the oil and the peroxide vulcanizing agent are fed by feeders to the continuous mixer at the same time.
However the thermoplastic elastomer composition according to the present invention may also be prepared in more than one step for example by melt mixing the thermoplastic polyolefine and the elastomer first whereafter mixing is continued and the peroxide is added to iniate vulcanization. The oil may for example be added before, during or after the vulcanization. The oil may however also be added partly before and partially after the vulcanization. The melt mixing may be carried out in conventional mixing equipment for example roll mills, Banbury mixers, Brabender mixers, continuous mixers for example a single screw extruder, a twin screw extruder and the like.
Preferably melt mixing is carried out in a twin screw extruder. The thermoplastic polyolefine, the elastomer, the oil and the peroxide vulcanising agent are described above.

The thermoplastic polyolefine, the elastomer, the oil, the peroxide vulcanising agent and additives, if any, are preferably heated to a temperature above the melting point of the thermoplastic polyolefine. The thermoplastic polyolefine, the elastomer, the oil and the peroxide vulcanizing agent may also be dry blended prior to the melt mixing.

The present invention also relates to articles comprising the thermoplastic elastomer composition according to the present invention. The articles may be shaped from the thermoplastic elastomer composition for example by extrusion, injection molding or blow molding. Preferably the articles are shaped by extrusion or injection molding.

The articles have a smooth surface and show no or little flow marks. Flow marks refer to a stripe pattern on the surface of the article. The articles are moreover excellent in softness and may be used in soft touch applications for example in consumer applications but also for example in automotive interior instrument panels, interior sheets, golf club grips.

Furthermore the articles can be used in applications in which resistance against alternating stresses or repetitive stains is important, for example weather profiles or covers for driving shafts. The thermoplastic elastomer composition according to the invention also makes it possible to use the articles in applications for high or low temperature and/or wherein chemical resistance is important, for example household appliances.

The invention will be elucidated by means of the following examples and comparative experiments without being limited thereto.

All dynamic vulcanizations were executed on a co-rotating Werner & Pfleiderer ™ twin screw extruder. All the indicated raw materials were added on a hopper.

The properties of the thermoplastic elastomer composition were analysed on extruded parts.
Different properties were analysed;
- Tensile strength, Mpa, according to ISO 37 II
- Elongation, %, according to ISO 37 II
- 100% modulus, Mpa, according to ISO 37 II
- Compression set (CS), %, according to ISO 815
- Hardness, Shore A, according to ISO 868
- Extrusion quality was measured visual by 3 persons who defined the surface defects, the surface roughness, surface smoothness and gloss and is expressed as the average of the 3 assesments by a score between 1-5. 1=bad extrusion quality, 3= acceptable extrusion quality, 5= good extrusion quality
- Haze - 1.0 mm, %, according to ASTM D1003
- Transmission -1.0 mm, %, according to ASTM D1003.

### Examples I, II and Comparative Experiment A

The following materials were used:
- Homopolymer of propylene, having a melt flow index (2.16 kg/230 °C) of 0,3.
- Talc (of Sigma-Aldrich)
- Vulcanisation system based on Trigonox 101 E30™
- Irganox 1010 ™ as co-agent
- Stabilizer
- Oil =Paraffinic oil Sunpar™
- EPDM consisting of 63% C2, 32,5% C3 and 4,5% ethylenenorbornene and comprising 50% mineral oil (all % being expressed as weight %).

### Example I

A mixture of 64,87% by weight of EPDM comprising 50% of oil, 11,67% by weight of polypropylene homopolymer with a melt flow index of 0,3 g/10 min, 1,29% by weight of Trigonox™, 1,63% by weight of talc, 0,25% by weight of a co-agent, 0,81% by weight of stabilizers and 19,46% by weight of paraffinic oil, was dynamically vulcanized.

Properties of the thermoplastic elastomer composition are given in table 1.

### Example II

A mixture of 58,65% by weight of EPDM comprising 50% of oil, 8,84% by weight of polypropylene homopolymer with a melt flow index of 0,3 g/10 min, 1,17% by weight of Trigonox™, 1% by weight of talc, 0,23% by weight of a co-agent, 0,73% by weight of stabilizers and 29,37% by weight of paraffinic oil was dynamically vulcanized.

Properties of the thermoplastic elastomer composition are given in table 1.

### Comparative experiment A

A mixture of 82,84% by weight of EPDM comprising 50% of oil, 13,94% by weight of polypropylene homopolymer with a melt flow index of 0,3 g/10 min, 1,27% by weight of Trigonox™, 1,24% by weight of talc, 0,22% by weight of a co agent and 0,49% by weight of stabilizers was dynamically vulcanized.

Properties of the thermoplastic elastomer composition are given in table 1.

**Table 1: Properties of the thermoplastic elastomer compositions**

| **Example/experiment** | I | II | A |
|---|---|---|---|
| Hardness (shore A) | 44 | 30 | 52 |

| Mechanical properties Parallel | | | |
|---|---|---|---|
| Tensile Strength (Mpa) | 3,4 | 2,2 | 3,9 |
| 100% modulus (Mpa) | 1,3 | 0,85 | 2,1 |
| Elongation at break (%) | 494 | 415 | 395 |

| Mechanical properties Perpendicular | | | |
|---|---|---|---|
| Tensile Strength (Mpa) | 3,9 | 2,6 | 4,4 |
| 100% modulus (Mpa) | 1,1 | 0,73 | 1,5 |
| Elongation at break (%) | 637 | 575 | 611 |
| Compression set (72hr/23 C) | 22 | 21 | 29 |
| Compression set (22hr/70 C) | 29 | 27 | 38 |
| Compression set (22hr/100 C) | 35 | 32 | 45 |
| Extrusion quality (1-5) | 4 | 5 | 1 |

From the above table it is clear that the thermoplastic elastomer compositions according to the present invention show good mechanical properties notwithstanding the combination of the peroxide vulcanization, the high oil concentrations, and the relative low amount of thermoplastic polyolefin.

### Examples III, IV, V and Comparative Experiment B

The following formulations were used to prepare mixtures, which were dynamically vulcanised.

**Table 2. Ingredients of the thermoplastic elastomer compositions (in phr)**

| Ingredients | III | IV | V | B |
|---|---|---|---|---|
| EPDM | 200 | 200 | 200 | 200 |
| PP homopolymer | 35 | | | 15 |
| PP polymer with nucleating agent | | 35 | 35 | 20 |
| Copolymer of ethylene and an alpha-olefin co-monomer | | | 113 | |
| Talc | 1 | 1 | 1 | |
| TRIM/Silica | 1 | 1 | 1 | |
| Irganox | 0.7 | 0.7 | 0.7 | |
| Chimasorb™ 119 | 0.5 | 0.5 | 0.5 | |
| Trigonox™ 101 E30 | 3 | 3 | 3 | |
| Stannous chloride | | | | 1 |
| Phenolic resin | | | | 1.2 |
| Anox 18 | | | | 0.7 |
| Pennzultra 1199 | 100 | 100 | 100 | 100 |
| | | | | |
| *TOTAL* | *341.2* | *341.2* | *454.2* | *337.9* |

The properties of the thermoplastic elastomer compositions are given in table 3.

**Table 3: Properties of the thermoplastic elastomer compositions**

| **Example/experiment** | III | IV | V | B |
|---|---|---|---|---|
| Hardness (shore A) | 35 | 31 | 43 | 42 |

| Mechanical properties | | | | |
|---|---|---|---|---|
| Tensile Strength (Mpa) | 2.6 | 2.3 | 2.7 | 2.3 |
| 100% modulus (Mpa) | 0.8 | 0.8 | 1.7 | 1.8 |
| Elongation at break (%) | 575 | 548 | 446 | 259 |

| Optical properties | | | | |
|---|---|---|---|---|
| Transmission - 1.0 mm (%) | 77 | 86 | 88 | 73 |
| Haze - 1.0 mm (%) | 98 | 89 | 50 | 97 |

From the above table it is clear that the thermoplastic elastomer compositions according to the present invention show good mechanical properties, and that the use of a polypropylene polymer containing a nucleating agent, thus having small crystalline regions, results in good optical properties, as does the use of a low crystalline copolymer of ethylene and a alpha-olefin co-monorner, making thermoplastic elastomer vulcanizates of this type suitable for applications where translucency or transparency of the material is important..

## Claims

1. Thermoplastic elastomer composition comprising a thermoplastic polyolefine, an elastomer and oil **characterised in that** it comprises less than 15% by weight of the thermoplastic polyolefine, relative to the total weight of the thermoplastic elastomer composition, the elastomer is peroxide vulcanized and the weight ratio oil/elastomer is above 1.5.

2. Thermoplastic elastomer composition according to claim 1 **characterized in that** the weight ratio oil/elastomer is above 1.6.

3. Thermoplastic elastomer composition according to any one of claims 1-2 **characterized in that** the amount of thermoplastic polyolefine is between 1-12% by weight relative to the total weight of the thermoplastic elastomer composition.

4. Thermoplastic elastomer composition according to any one of claims 1-3 **characterized in that** the amount of thermoplastic polyolefine is between 5-10% by weight relative to the total weight of the thermoplastic elastomer composition.

5. Thermoplastic elastomer composition according to any one of claims 1-4 **characterized in that** the elastomer is chosen from copolymers of ethylene and propylene (EPM) or copolymers of ethylene, propylene and a third monomer (EPDM) or a mixture of EPDM and EPM.

6. Thermoplastic elastomer composition according to any one of claims 1-5 **characterized in that** the thermoplastic polyolefine is polyethylene, polypropylene or a mixture thereof.

7. Thermoplastic elastomer composition according to any one of claims 1-6 **characterized in that** the elastomer is vulcanized to a gelcontent of at least 98%.

8. Thermoplastic elastomer composition according to any one of claims 1-7 **characterized in that** the oil is a paraffinic oil.

9. Thermoplastic elastomer composition according to any one of claims 1-7 **characterized in that** the oil is a highly hydrogenated oil in which the concentration of aromatic compounds is preferably less than 4 wt.% and the concentration of polar compounds is less than 0.3 wt.%.

10. Thermoplastic elastomer composition according to any one of claims 1-9 **characterized in that** between 155-250 parts by weight of oil is present per 100 parts by weight of elastomer.

11. Process for the preparation of a thermoplastic elastomer composition according to any one of claims 1-10 comprising melt mixing and kneading a thermoplastic polyolefine, an elastomer and oil in the presence of a peroxide vulcanising agent.

12. Articles comprising the thermoplastic elastomer composition according to any one of the claims 1-11.

## Patentansprüche

1. Thermoplastische Elastomerzusammensetzung, umfassend ein thermoplastisches Polyolefin, ein Elastomer und Öl, **dadurch gekennzeichnet, daß** sie weniger als 15 Gew.-% des thermoplastischen Polyolefins, relativ zu dem Gesamtgewicht der thermoplastischen Elastomerzusammensetzung, umfaßt, das Elastomer peroxidisch vulkanisiert ist und das Gewichtsverhältnis Öl/Elastomer über 1,5 liegt.

2. Thermoplastische Elastomerzusammensetzung gemäß Anspruch 1, **dadurch gekennzeichnet, daß** das Gewichtsverhältnis Öl/Elastomer über 1,6 liegt.

3. Thermoplastische Elastomerzusammensetzung gemäß einem der Ansprüche 1-2, **dadurch gekennzeichnet, daß** die Menge des thermoplastischen Polyolefins zwischen 1-12 Gew.-%, relativ zu dem Gesamtgewicht der thermoplastischen Elastomerzusammensetzung, ist.

4. Thermoplastische Elastomerzusammensetzung gemäß einem der Ansprüche 1-3, **dadurch gekennzeichnet, daß** die Menge des thermoplastischen Polyolefins zwischen 5-10 Gew.-%, relativ zu dem Gesamtgewicht der thermoplastischen Elastomerzusammensetzung, ist.

5. Thermoplastische Elastomerzusammensetzung gemäß einem der Ansprüche 1-4, **dadurch gekennzeichnet, daß** das Elastomer aus Copolymeren von Ethylen und Propylen (EPM) oder Copolymeren von Ethylen, Propylen und einem dritten Monomer (EPDM) oder einem Gemisch von EPDM und EPM ausgewählt ist.

6. Thermoplastische Elastomerzusammensetzung gemäß einem der Ansprüche 1-5, **dadurch gekennzeichnet, daß** das thermoplastische Polyolefin Polyethylen, Polypropylen oder ein Gemisch davon ist.

7. Thermoplastische Elastomerzusammensetzung gemäß einem der Ansprüche 1-6, **dadurch gekennzeichnet, daß** das Elastomer zu einem Gelgehalt von mindestens 98% vulkanisiert ist.

8. Thermoplastische Elastomerzusammensetzung gemäß einem der Ansprüche 1-7, **dadurch gekennzeichnet, daß** das Öl ein Paraffinöl ist.

9. Thermoplastische Elastomerzusammensetzung gemäß einem der Ansprüche 1-7, **dadurch gekennzeichnet, daß** das Öl ein hoch hydriertes Öl ist, in welchem die Konzentration an aromatischen Verbindungen vorzugsweise weniger als 4 Gew.-%, und die Konzentration an polaren Verbindungen weniger als 0,3 Gew.-% ist.

10. Thermoplastische Elastomerzusammensetzung gemäß einem der Ansprüche 1-9, **dadurch gekennzeichnet, daß** zwischen 155-250 Gew.-Teilen an Öl pro 100 Gew.-Teilen an Elastomer vorliegt.

11. Verfahren zur Herstellung einer thermoplastischen Elastomerzusammensetzung gemäß einem der Ansprüche 1-10, umfassend das Schmelzmischen und Kneten von einem thermoplastischen Polyolefin, einem Elastomer und Öl in der Gegenwart eines peroxidischen Vulkanisationsmittels.

12. Gegenstände, umfassend die thermoplastische Elastomerzusammensetzung gemäß einem der Ansprüche 1-11.

## Revendications

1. Composition d'élastomère thermoplastique comprenant une polyoléfine thermoplastique, un élastomère et une huile **caractérisée en ce qu'**elle comprend moins de 15 % en poids de l'oléfine thermoplastique, par rapport au poids total de la composition d'élastomère thermoplastique, l'élastomère est vulcanisé au peroxyde et le rapport en poids huile/élastomère est supérieur à 1,5.

2. Composition d'élastomère thermoplastique selon la revendication 1, **caractérisée en ce que** le rapport en poids huile/élastomère est supérieur à 1,6.

3. Composition d'élastomère thermoplastique selon l'une quelconque des revendications 1 ou 2, **caractérisée en ce que** la quantité de polyoléfine thermoplastique est entre 1 et 12 % en poids par rapport au poids total de la composition d'élastomère thermoplastique.

4. Composition d'élastomère thermoplastique selon l'une quelconque des revendications 1 à 3, **caractérisée en ce que** la quantité de polyoléfine thermoplastique est entre 5 et 10 % en poids par rapport au poids total de la composition d'élastomère thermoplastique.

5. Composition d'élastomère thermoplastique selon l'une quelconque des revendications 1 à 4, **caractérisée en ce que** l'élastomère est choisi parmi les copolymères d'éthylène et de propylène (EPM) ou les copolymères d'éthylène, propylène et d'un troisième monomère (EPDM) ou un mélange de EPDM et EPM.

6. Composition d'élastomère thermoplastique selon l'une des revendications 1 à 5, **caractérisée en ce que** la polyoléfine thermoplastique est le polyéthylène, polypropylène ou un mélange d'entre eux.

7. Composition d'élastomère thermoplastique selon l'une quelconque des revendications 1 à 6, **caractérisée en ce que** l'élastomère est vulcanisé à une teneur en gel d'au moins 98 %.

8. Composition d'élastomère thermoplastique selon l'une quelconque des revendications 1 à 7, **caractérisée en ce que** l'huile est une huile paraffinique.

9. Composition d'élastomère thermoplastique selon l'une quelconque des revendications 1 à 7, **caractérisée en ce que** l'huile est une huile hautement hydrogénée dans laquelle la concentration de composés aromatiques est de préférence inférieure à 4 % en poids et la concentration de composés polaires est inférieure à 0,3 % en poids.

10. Composition d'élastomère thermoplastique selon l'une quelconque des revendications 1 à 9, **caractérisée en ce qu'**entre 155 et 250 parties en poids d'huile sont présentes pour 100 parties en poids d'élastomère.

11. Procédé pour la préparation d'une composition d'élastomère thermoplastique selon l'une quelconque des revendications 1 à 10, comprenant le mélange à l'état fondu et le malaxage d'une polyoléfine thermoplastique, d'un élastomère et d'une huile en présence d'un agent vulcanisant peroxyde.

12. Article comprenant la composition d'élastomère thermoplastique selon l'une quelconque des revendications 1 à 11.
